# EUROPEAN PATENT SPECIFICATION

(11) **EP 4 197 916 B1**
(45) Date of publication and mention of the grant of the patent: **18.06.2025**
(21) Application number: 22211371.4
(22) Date of filing: 05.12.2022
(51) Int. Cl.: B64D 47/02, B64D 47/04, F16K 1/32, F16K 15/02, F16K 17/02, F16K 17/06, F16K 24/04, F16K 24/06, F16K 31/08, F21S 45/30, F21V 31/03, B64D 47/06, F21W 107/30

(54) **MAGNETICALLY CONTROLLED FLUID DRAIN VALVE FOR AIRCRAFT EXTERIOR LIGHT UNIT**
MAGNETISCH GESTEUERTES FLÜSSIGKEITSABLASSVENTIL FÜR EINE FLUGZEUGAUSSENLICHTEINHEIT
SOUPAPE DE VIDANGE DE FLUIDE À COMMANDE MAGNÉTIQUE POUR UNITÉ DE LUMIÈRE EXTÉRIEURE D'AÉRONEF

(30) Priority: 20.12.2021 IN 202141059485; 29.06.2022 US 202217852832
(43) Date of publication of application: 21.06.2023
(73) Proprietor: Goodrich Corporation, Charlotte, NC 28217-4578 (US)
(72) Inventor: KRISHNA, Abhilash, Bangalore (IN); JOHN, Poly Puthur, Bangalore (IN); PURUSHOTHAMAN, Srijith, Thrissur (IN)
(74) Representative: Dehns

(56) References cited:
- DE-A1- 102005 017 328
- GB-A- 1 220 230
- US-A- 4 489 754
- US-A- 6 000 417
- US-A1- 2010 090 138
- US-A1- 2018 335 150

## Description

### FIELD

The present disclosure relates to aircraft lighting systems, and, more specifically, to aircraft exterior lamps and lighting systems.

### BACKGROUND

Exterior lighting on an aircraft enhances safety on the ground, during taxiing, and in-flight. Exterior systems often include anti-collision lighting, floor and spotlights, navigation lights and beacons, and emergency lights. These lights, which can be found on the upper and lower fuselage, tail, and wings, are subjected to intense environmental conditions, such as high winds and storms, as well as vast temperature and pressure changes during aircraft climb and descent. These conditions can damage the lighting systems. For example, since the external ambient air pressure varies with flight altitude, the light units are usually vented to avoid excessive overpressure or loss of pressure formed during flight ascent and descent periods. In exchanging air between the interior of an exterior light unit and the environment, water vapor in the air may flow into the exterior light unit and may eventually condense within the unit as the temperature changes. Liquid water build-up may deteriorate light unit functionality, threating operational safety of the entire aircraft. A light unit is disclosed in US 2018/335150 A1. The light unit is provided with a drain valve comprising first and second housing portions with matching threads allowing them to be screwed together, a spring mounted to a protrusion of a bottom plate of the second housing portion and supporting a plunger, the plunger comprising a duct, a semi-permeable membrane and a sealing ring arranged along its circular outer periphery. US 6 000 417 A, US 2010/090138 A1, GB 1 220 230 A, US 4 489 754 A and DE 10 2005 017328 A1 describe valves with magnets.

### SUMMARY

A valve is provided as defined by claim 1.

In various embodiments, the poppet may further comprise a poppet stem. In various embodiments, the poppet stem may define a channel. In various embodiments, the channel may be configured to permit at least one of air and water vapor to pass therethrough. In various embodiments, the poppet may further comprise a membrane. The membrane may be a semi-permeable membrane. In various embodiments, the membrane may be configured to overlay the poppet stem defining the channel. In various embodiments, the membrane may be configured to permit at least one of air and water vapor to pass therethrough. In various embodiments, the membrane may be further configured to be impermeable to liquid water.

In various embodiments, the magnet may comprise a plurality of annular segments. The plurality of annular segments may define a plurality of recesses. Each recess may extend between the inner cylindrical face and the outer cylindrical face of the magnet. In various embodiments, the magnet may be a continuous, annular magnet.

An aircraft light unit is also provided as defined by claim 12.

In various embodiments, the poppet may further comprise a poppet stem. In various embodiments, the poppet stem may define a channel. In various embodiments, the channel may be configured to permit at least one of air and water vapor to pass therethrough.

In various embodiments, polymer seal may be an O-ring. In various embodiments, the polymer seal may be configured to retain the poppet to the shoulder portion in a seated position.

In various embodiments, the semi-permeable membrane may be configured to overlay the poppet stem defining the channel. In various embodiments, the semi-permeable membrane may be configured to permit at least one of air and water vapor to pass into the channel. In various embodiments, the semi-permeable membrane may be further configured to be impermeable to liquid water. In various embodiments, the liquid water may be configured to accumulate along the membrane.

In various embodiments, the magnetic flux traversing across the air gap may develop a magnetic force across the air gap. In various embodiments, the magnetic force across the air gap may be configured to attract the poppet to the inner surface of the shoulder portion. In various embodiments, the magnetic force may be configured to close the valve. In various embodiments, the poppet may be configured to move out of the seated position and open the valve when the magnetic force across the air gap is exceeded by a pressure force of the impermeable liquid water acting on the poppet. In various embodiments, the magnetic force across the air gap may decrease as the valve opens.

In various embodiments, the inner body may define a plurality of cavities. In various embodiments, the plurality of cavities may be configured to permit water to drain out of the valve as the valve opens. In various embodiments, the pressure force of the impermeable liquid water accumulated along the semi-permeable membrane may decrease as the water drains out the valve. In various embodiments, the magnetic force across the air gap may be configured to increase as the pressure force of the liquid water within the valve decreases. In various embodiments, the increasing magnetic force across the air gap may shift the poppet back into a seated position.

A method of assembling a valve for an aircraft light unit is also provided as defined by claim

15. Further embodiments are provided as defined in the respective dependent claims.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 illustrates an aircraft, in accordance with various embodiments;
FIG. 2A illustrates a surface of an aircraft having a plurality of exterior light units, in accordance with various embodiments;
FIG. 2B illustrates a surface of an aircraft having a plurality of exterior light units, in accordance with various embodiments;
FIG. 3A illustrates a cross-section view of a magnetically controlled fluid drain valve for an exterior light unit, in accordance with various embodiments;
FIG. 3B illustrates a portion of a cross-section view of a magnetically controlled fluid drain valve for an exterior light unit, including a magnetic flux line, in accordance with various embodiments;
FIG. 3C illustrates a portion of a cross-section view of a magnetically controlled fluid drain valve for an exterior light unit, including a magnetic flux line, in accordance with various embodiments;
FIG. 4 illustrates a cross-section view of a magnetically controlled fluid drain valve for an exterior light unit, in accordance with various embodiments;
FIG. 5A illustrates a side view of a valve assembly for an exterior light unit, in accordance with various embodiments;
FIG. 5B illustrates a cross-section view of a valve assembly for an exterior light unit, in accordance with various embodiments;
FIG. 6A illustrates a portion of a magnet, in accordance with various embodiments;
FIG. 6B illustrates a magnet segment, in accordance with various embodiments;
FIG. 7A illustrates a graph showing magnetic and spring force variation during valve opening and closing, in accordance with various embodiments;
FIG. 7B illustrates a graph showing valve effective closing force, in accordance with various embodiments;
FIG. 8 illustrates a method of assembling a valve of an aircraft light unit, in accordance with various embodiments;

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized within the scope of the invention as defined by the claims. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

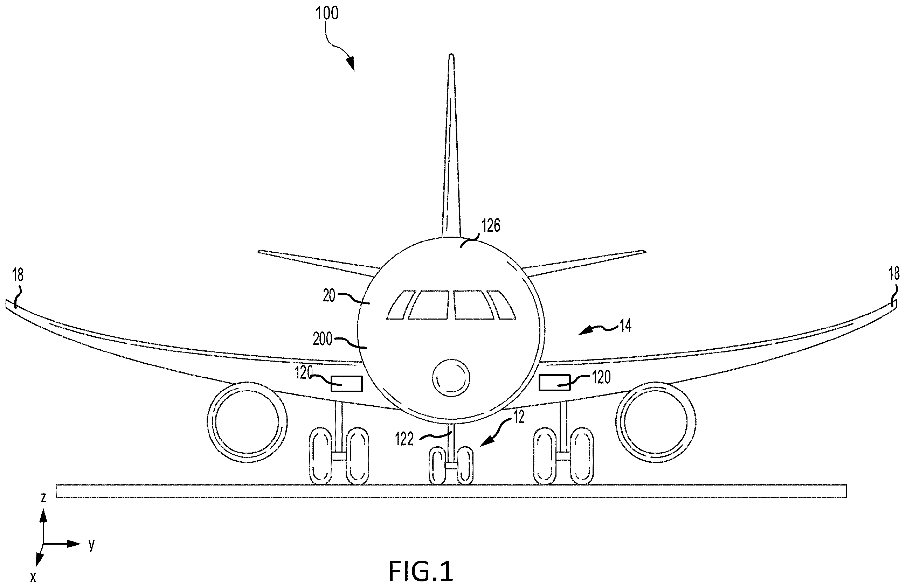

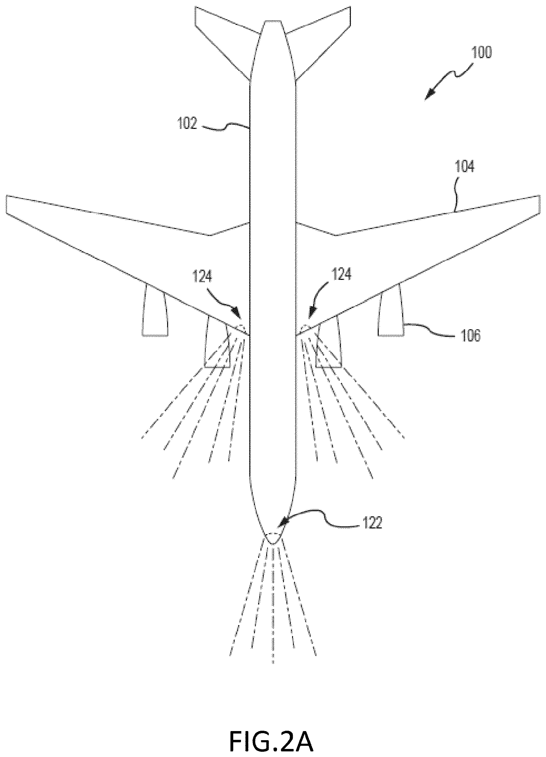

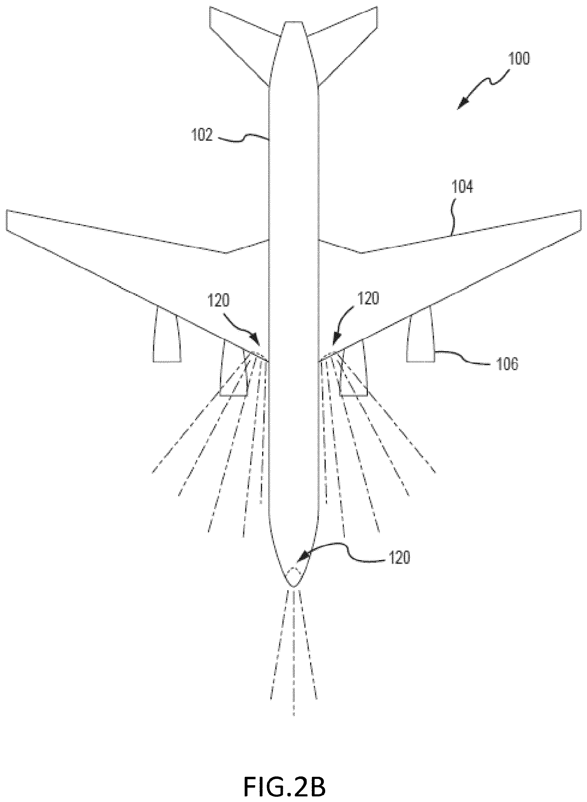

With reference to FIG. 1, an aircraft 100 in accordance with various embodiments may comprise aircraft systems, for example, one or more landing gear such as landing gear 12, which may generally support aircraft 100 when aircraft is not flying, allowing aircraft 100 to taxi, take off, and land without damage. Aircraft 100 may include one or more exterior lamps 14, or lighting units, such as, for example, landing lights 120, taxi lights 122, and navigation lights 126. Referring to FIGS. 2A and 2B, the aircraft 100 is illustrated according to various embodiments. The aircraft 100 includes a fuselage 102, a pair of wings 104, and a pair of engines 106 for each wing 104. The aircraft 100 include landing lights 120, taxi lights 122, and runway turnoff lights 124. These lights 120, 122, and 124 may be of any appropriate configuration and disposed at any appropriate location or combination of locations on the exterior of the aircraft 100. Aircraft 100 may include any number of other exterior lamps 14 such as logo lights, engine scan lights, anti-collision lights, strobe lights, beacon lights, cargo compartment lights, obstruction lights, landing gear lights, and/or the like.

Due to the effects of the ambient environment on the exterior lamps 14, the exterior lamps 14 may comprise a variety of pressure release mechanisms, for example, one or more pressure release valves. As fluid in the exterior lamp is collected in the ambient air, the valves may release the fluid to prevent damage to the exterior lamp.

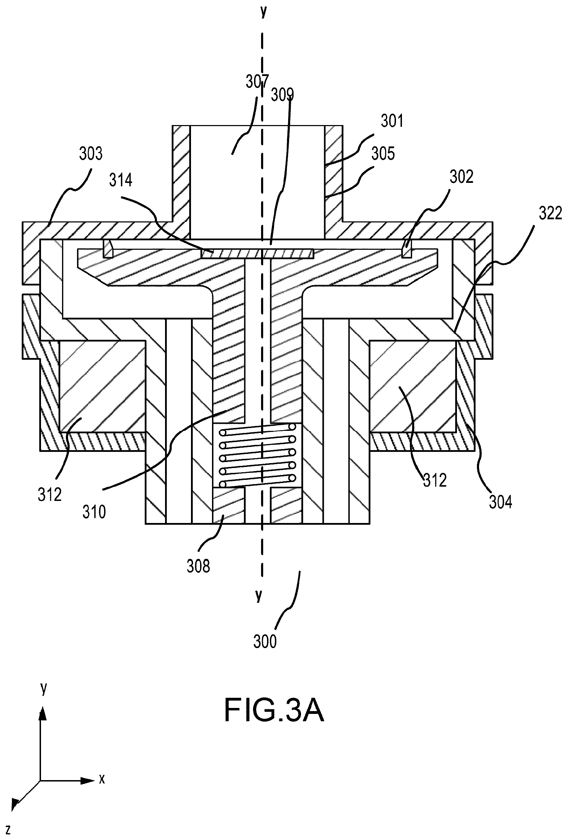

FIGS. 3A-3C illustrate cross-sections of a magnetically controlled fluid drain valve 300. As shown, the valve 300 includes an inlet fitting body 301, an inner body 322, an outer body 304, and a permanent magnet 312. The inlet fitting body 301 includes a collar portion 305 and a shoulder portion 303. The collar portion 305 at least partially defines a lighting cavity 307. In various embodiments, the collar portion 305 may be configured to assemble at the lighting cavity 307 to a corresponding structure of the lighting housing. In various embodiments, and as shown by the y-y' axis in FIG. 3A, gravity may be in the negative y direction along the y-y axis. In various embodiments, liquid water, water vapor, and air, may flow from the lighting housing through the collar portion 305 in the negative y direction. The collar portion 305 and the shoulder portion 303 are comprised of different materials. The collar portion 305 is comprised of a non-magnetic material, and the shoulder portion 303 comprises a magnetic material. The shoulder portion 303 comprises an inner surface at least partially defining an air gap 309.

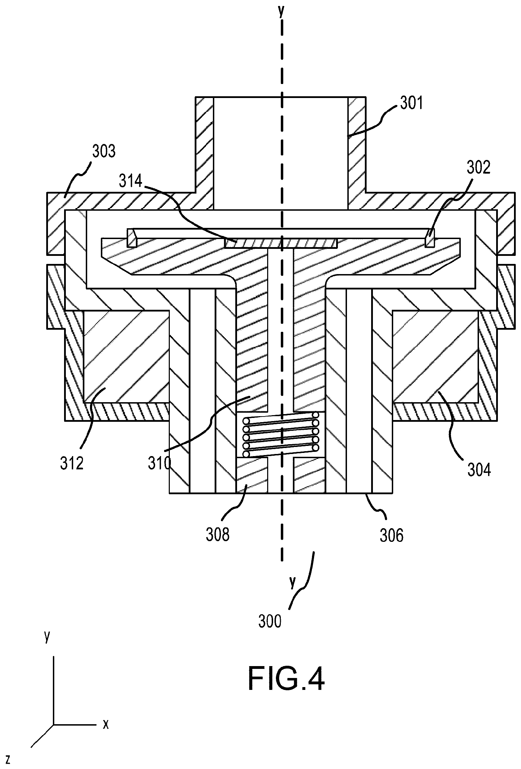

With further reference to FIGS. 3A and 4, the inner body 322 includes a poppet 310. As shown, the poppet 310 is disposed between the inner surface of the shoulder portion 303 and a seat 308. The seat 308 is configured to support the poppet 310. In various embodiments, the seat 308 may be a spring. The poppet 310 has an annular groove configured to retain a polymer seal 302. The polymer seal 302 may be configured to couple the poppet 310 to the inner surface of the shoulder portion 303 of the inlet fitting body 301. In various embodiments, the inner surface of the shoulder portion 303 may be serrated to improve coupling of the polymer seal 302 to the inner surface of the shoulder portion 303. In various embodiments, the polymer seal 302 may be configured to retain the poppet 310 to the shoulder portion 303 in a seated position. In various embodiments, the polymer seal 302 may be an O-ring, or any substantially ring-like shape. As shown in FIG. 3A, the valve 300 may be in a closed position, and the poppet 310 in a seated position, when the polymer seal 302 is coupled to the inner surface of the shoulder portion 303. In various embodiments, the polymer seal 302 coupled to the inner surface of the shoulder portion 303 may prevent the ingress of fluid into the valve's 300 inner body 322.

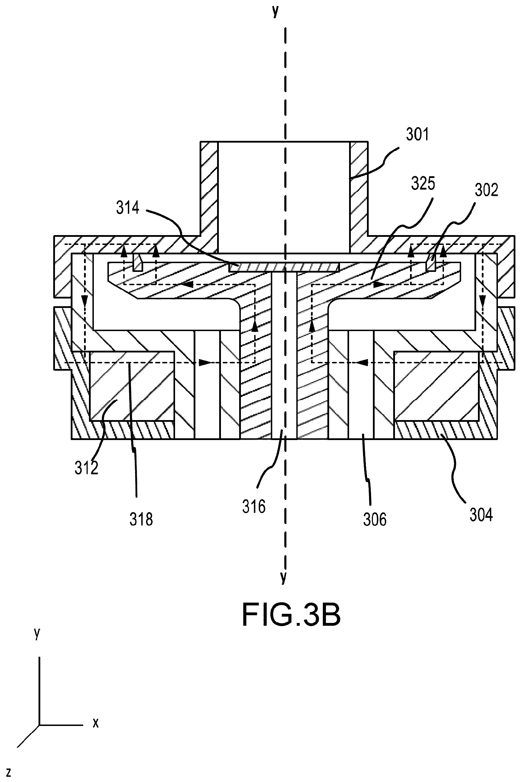

Referring to FIGS. 3A and 3B, the poppet 310 may further comprise a poppet stem defining a channel 316. In various embodiments, the channel 316 may be configured to permit at least one of air and water vapor to pass therethrough. In doing so, the poppet 310 may be configured to control the flow of gas exchanged between the lighting unit and the external environment. In various embodiments, the poppet 310 may include a membrane 314. In various embodiments, the membrane 314 may be configured to overlay the poppet stem defining the channel 316. In various embodiments, the membrane 314 may be disposed within a diameter of the polymer seal 302.

In various embodiments, the membrane 314 may be semi-permeable and may be configured to permit air, water vapor, and other gases, to pass therethrough, exchanging gases with the external environment via the channel. It may be especially advantageous to allow water vapor to be exchanged to prevent its condensation into liquid water within the valve 300 and/or lighting housing. Some water vapor may condense and accumulate as liquid water along the semi-permeable membrane 314. In various embodiments, the membrane 314 may be impermeable to liquid water. In various embodiments, the membrane 314 may comprise expanded polytetrafluoroethylene.

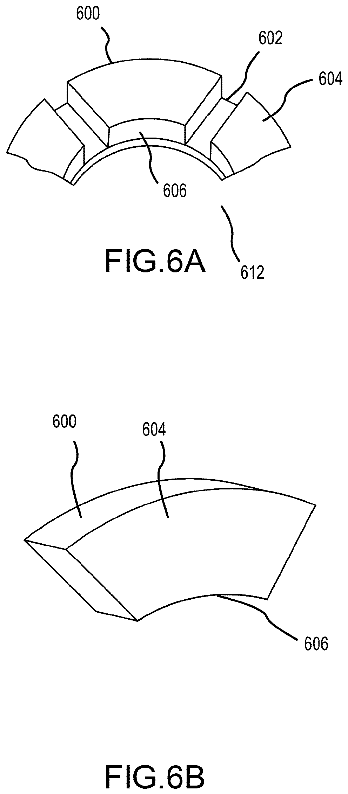

In further reference to FIGS. 3A-3C, a magnetically controlled fluid drain valve comprises a permanent magnet 312. The magnet 312 is disposed between the inner body 322 and the outer body 304. In various embodiments, and with further reference to FIGS. 6A and 6B, the magnet 612 may further comprise a plurality of annular segments 604. The plurality of annular segments 604 may define a plurality of recesses 602. The magnet 612 further comprises an inner cylindrical face 606 having a north pole and an outer cylindrical face 600 having a south pole. In various embodiments, the magnet may be radially polarized between the inner cylindrical face 606 and the outer cylindrical face 600, keeping the north pole and the south pole in the cylindrical faces.

In various embodiments, each recess 602 may extend between the inner cylindrical face 606 and the outer cylindrical face 600 of the magnet 612. To maintain optimal magnetic strength, it may be desirable to space the segments closer together, reducing recess width. In various embodiments, the magnet 612 may comprise at least one recess or no recess at all. In various embodiments, the magnet 612 may be a continuous, annular magnet.

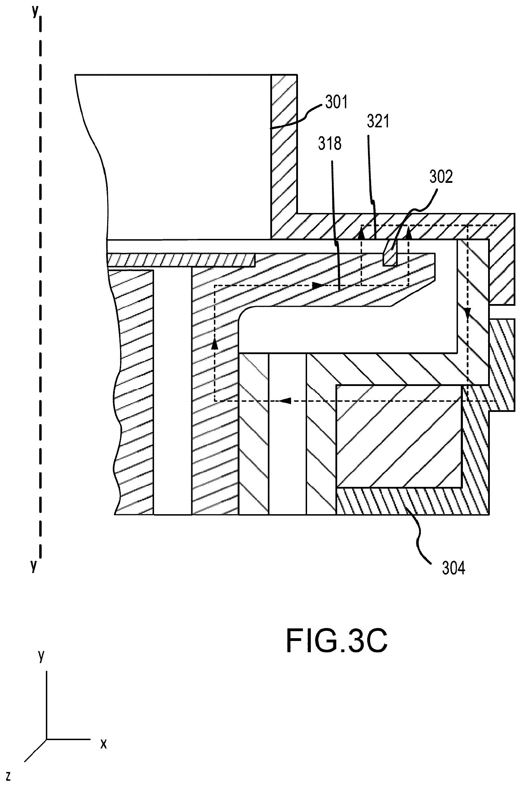

As shown in FIG. 3B, the magnet 312 is configured to induce a magnetic flux circuit 318. In various embodiments, the magnetic flux circuit 318 may comprise a plurality of closed loop paths containing a magnetic flux. In various embodiments, and in further reference to FIGS. 3A, 3C, and 6A, the magnetic flux circuit 318 may originate from the inner cylindrical face 606 of the magnet 612, flow through the inner body 322 and up the poppet 310, traverse the air gap into the magnetic shoulder portion 303 of the inlet fitting body, flow down the inner body 322 and into the outer body 304, and terminate at the outer cylindrical face 600 of the magnet 312.

In various embodiments, the inner body 322, the outer body 304, the poppet 310, and the shoulder portion 303 of the inlet fitting body 301 may be comprised of magnetically permeable materials, such as, for example, soft iron, iron, cobalt, steel, chromium steel, ferro-magnetic stainless steel, and the like. In various embodiments, the collar portion 305 of the inlet fitting body 301 may be comprised of non-magnetic materials, such as, for example, austenitic chromium-nickel stainless steel and low carbon versions thereof, and the like. In various embodiments, the magnet 312 may be comprised of, for example, samarium cobalt, or any other suitable magnet material. In various embodiments, the polymer seal 302 may be comprised of soft polymer materials, such as, for example, polytetrafluoroethylene (PTFE), tetrafluoroethylene, and the like.

In various embodiments, the magnetic flux circuit 318 may be fixed by the magnet design and the reluctance or resistance in the flux path. The primary reluctance is due to the air gap length, or the space defined by the inner surface of the shoulder portion 303 and the poppet 310. As shown in FIG. 3C, while traversing the air gap into the magnetic shoulder portion 303, the flux generates opposing pole faces 321 across the air gap, generating magnetic force. Referring to FIG. 3B, in various embodiments, the magnetic force across the air gap may be configured to attract the poppet 310 to the inner surface of the shoulder portion 303, closing the valve 300. This magnetic force may close the valve 300 and may be configured to induce a compressive sealing stress of the polymer seal 302 against the inner face of the shoulder portion 303, keeping the valve 300 in closed position and the poppet 310 in a seated position.

However, magnetic force generated by the magnetic flux circuit 318 is not the only force acting on the poppet 310. In various embodiments, the pressure of the liquid water accumulating along and trapped by the semi-permeable membrane 314 may be influenced by the pressure differences between the light unit and the external environment. In various embodiments, and as shown in FIG. 4, in response to the pressure force of the light unit exceeding the magnetic force, the light unit pressure may act on the trapped liquid along the poppet 310, pushing the poppet 310 in the negative y direction along the y-y axis onto the seat 308 and out the seated position. This increases the air gap defined by the shoulder portion 303 and decouples the polymer seal 302 from the inner face of the shoulder portion 303.

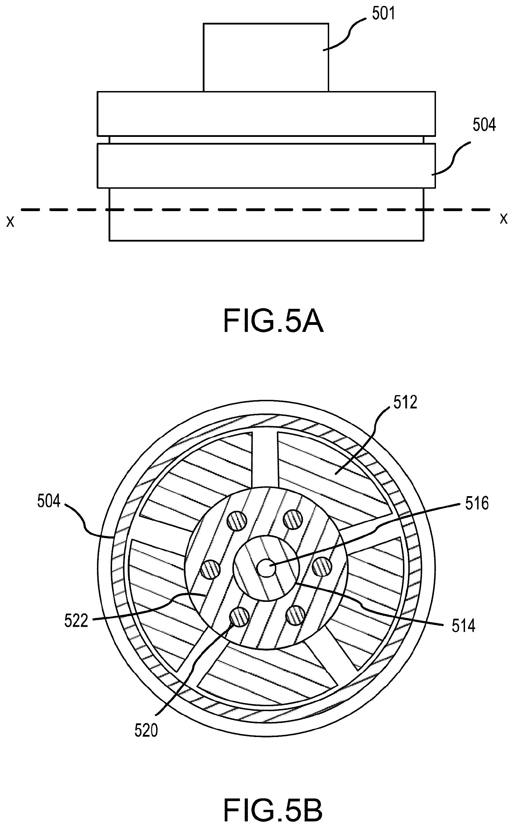

FIG. 5B illustrates a cross-section along the x-x axis of FIG. 5A. As shown, and in various embodiments, the inner body 522 may define a plurality of cavities 520. In various embodiments, the cavities 520 may be configured to permit liquid water to drain from the upstream lighting housing. In further reference to FIGS. 3B and 4, 306 is later referred to as cavities. In various embodiments, while the valve 300 is in a closed position, and the poppet 310 is in a seated position, the liquid water may be blocked from entering the cavities by the polymer seal 302. As the polymer seal 302 decouples from the inner face of the shoulder portion 303, the liquid water may exit the valve 300 via the cavities 306. The semi-permeable membrane 314 overlaying the channel 316 remains impermeable to liquid water. Thus, as the valve 300 opens and the poppet 310 moves in the negative y direction along the y-y axis of the inner body 322, the cavities 306 may act as a primary liquid water drain, while the channel remains an air/water vapor exchange. When the valve is in the closed position, in various embodiments, the polymer seal 302 may prevent secondary leakage into the cavities 306.

In general, and as shown in FIG. 4, the poppet 310 may be transmitted linearly within the inner body 322 in response to a force acting upon it at the inner surface air gap. This force may be, for example, the pressure of the liquid water acting on the poppet or the magnetic force attracting the poppet to the inner surface of the shoulder portion.

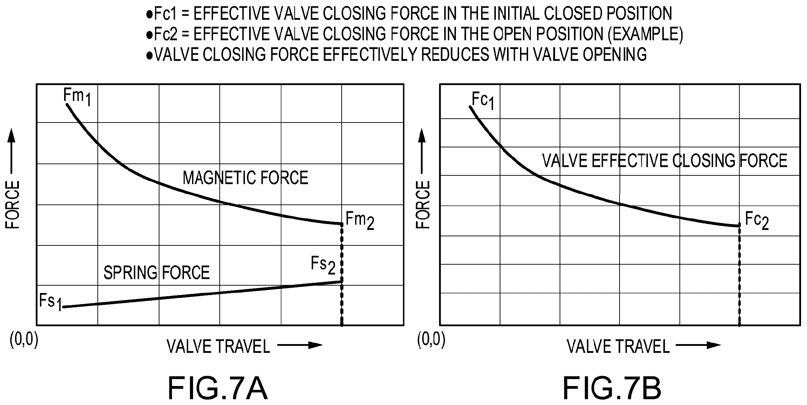

FIGS. 7A and 7B illustrate a particular benefit of the magnetically controlled fluid drain valve shown in previous figured. The magnetic force is proportional to the pole face area and the square of the magnetic flux density available across the air gap. As demonstrated in FIG. 7B, as the air gap defined by the shoulder portion 303 increases, pushing the valve 300 open from the closed position, the magnetic force across the air gap decreases. As liquid water is vented into the external environment as the valve 300 is open, the pressure within the lighting unit may equalize with that of the external environment, reducing the pressure force within the lighting unit and valve 300 relative to that of the magnetic force generated by the magnetic flux circuit 318. As the magnetic force exceeds the pressure acting on the poppet 310, the magnetic force generated by the magnetic flux circuit 318 traversing across the air gap attracts the poppet 310 back to the inner face of the shoulder portion 303, reducing the size of the air gap. The magnetic force continues to increase as the air gap decreases, urging the polymer seal 302 into the inner face of the shoulder portion 303 and inducing compressive stress once more.

Furthermore, as shown in FIG. 7A, it may be desirable to choose a seat 308, or spring, that may exert de minimus force onto the poppet 310, especially as the poppet 310 moves in the negative y direction along the y-y axis within the inner body 322 as the valve 300 opens. If the seat force acting on the poppet 310 as the valve opens were to exceed the minimum magnetic force, then the seat 308, rather than the magnet 312 would determine when the valve closes. This may be less desirable, since the seat 308 may force the valve 300 closed before all the liquid water is drained. For example, in a typical spring-based valve, as the valve opens, a spring with a high spring rate is more likely to close the valve shut before the water drains. The spring constant of a given coil spring, rather than the pressure within the light unit, would determine the timing of valve closure.

Conversely, in relying on magnetic force tied to the pressure within the lighting unit, the valve 300 may stay open longer as the pressure between the lighting unit and the external environment equalizes, increasing the likelihood that the liquid water is fully drained. In sum, as the air gap increases, the magnetic force decreases, ensuring that less force will oppose the poppet 310 as the valve opens, and effectively creating a negative spring rate to keep the valve 300 open longer. The relationship between the lighting unit pressure and the magnetic force determines the timing of valve actuation (i.e., opening and closing), rather than any force exerted by the seat 308.

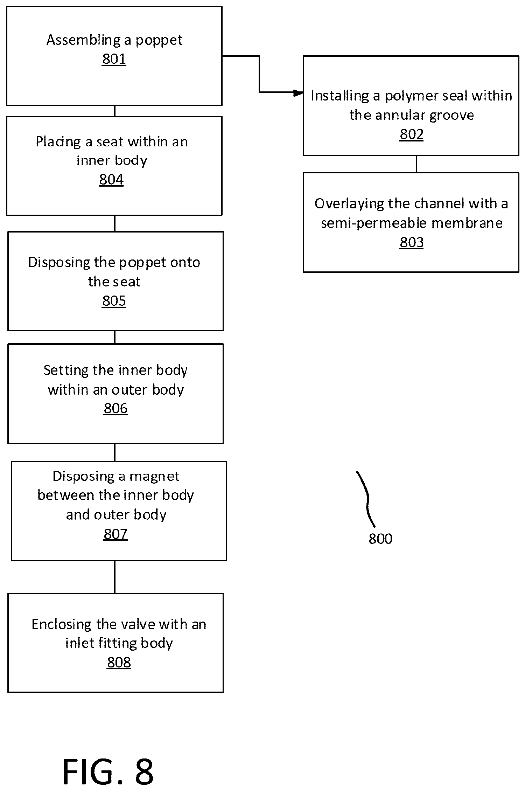

FIG. 8 illustrates a method 800 of assembling the valve 300. As shown, and in further reference to FIGS. 3A-C, the method 800 comprises assembling 801 a poppet 310. The poppet 310 comprises a poppet stem defining a channel 316. In various embodiments, the channel 316 may be configured to permit at least one of air and water vapor to pass therethrough. The poppet 310 further comprises a planar face 325 defining an annular groove. Assembling 801 the poppet 310 further comprises installing 802 a polymer seal 302 within the annular groove. The polymer seal 302 is an O-ring. Assembling 801 the poppet 310 further comprises overlaying 803 the channel 316 with a semi-permeable membrane 314. The semi-permeable membrane 314 is configured to permit at least one of air and water vapor to pass into the channel 316, and is further configured to be impermeable to liquid water. The liquid water may accumulate along the membrane 314.

The method of assembling 800 the valve comprises placing 804 a seat 308 within an inner body 322 of the valve 300. The method 800 further comprises disposing 805 the poppet 310 onto the seat 308 within the inner body 322. The seat 308 is configured to support the poppet 310. The inner body 322 is configured to house the poppet 310 and the seat 308. The method 800 further comprises setting 806 the inner body 322 within an outer body 304 The outer body 304 is configured to ring the inner body 322. Setting 806 the inner body 322 within the outer body 304 defines a recess between the inner body 322 and the outer body 304. The method of assembling 800 the valve further comprises disposing 807 a permanent magnet 312 within the recess between the inner body 322 and the outer body 304. In further reference to FIGS. 6A-B, the magnet 312 further comprises an inner cylindrical face 606 having a north pole and an outer cylindrical face 600 having a south pole.

The method of assembling 800 the valve 300 further comprises enclosing 808 the valve 300 with an inlet fitting body 301. The inlet fitting body 301 is configured to cover the inner body 322, the magnet 312, and the outer body 304. The inlet fitting body 301 comprises a shoulder portion 303 and a collar portion 305. In various embodiments, the shoulder portion 303 may comprise an inner surface that at least partially defines an air gap 309. In various embodiments, the collar portion 305 may at least partially define a lighting cavity 307. In various embodiments, the collar portion may be configured to couple to a lighting housing of a lighting unit at the lighting cavity.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

## Claims

1. A valve for an exterior aircraft light unit, the valve comprising:
an inlet fitting body (301) having a non-magnetic collar portion (305) and a magnetic shoulder portion (303), wherein the non-magnetic collar portion at least partially defines a lighting cavity (307), wherein the magnetic shoulder portion comprises an inner surface;
an outer body (304);
an inner body (322) disposed within the outer body (304), the inner body comprising:
a poppet (310) disposed between the inner surface of the shoulder portion and a seat (308), wherein the inner surface of the magnetic shoulder portion (303) faces the inner body and the poppet;
wherein the seat is configured to support the poppet; an air gap (309) extending between the magnetic shoulder portion inner surface and
the poppet;
a polymer seal (302) retained within an annular groove of the poppet, wherein the polymer seal is configured to couple the poppet to the inner surface of the shoulder portion of the inlet fitting body; and
a permanent magnet (312) disposed between the inner body and an outer body of the valve, wherein the magnet further comprises an inner cylindrical face (606) having a north pole and an outer cylindrical face (600) having a south pole, the outer cylindrical face (600) being radially opposite the inner cylindrical face (606),
wherein the magnet of the valve is configured to induce a magnetic flux circuit (318), wherein the magnetic flux circuit induced by the magnet comprises a plurality of closed loop paths containing a magnetic flux, wherein the magnetic flux originates from the inner cylindrical face (606) of the magnet, flows through the inner body and up the poppet, traverses the air gap into the magnetic shoulder portion of the inlet fitting body, flows down the inner body and into the outer body, and terminates at the outer cylindrical face (600) of the magnet.

2. The valve of claim 1, wherein the polymer seal is an O-ring.

3. The valve of claim 1 or 2, wherein the magnetic flux traversing across the air gap (309) develops a magnetic force across the air gap, wherein the magnetic force across the air gap is configured to attract the poppet to the inner surface of the shoulder portion, wherein the magnetic force is configured to close the valve, and optionally wherein the polymer seal is configured to retain the poppet to the shoulder portion in a seated position.

4. The valve of claim 3, wherein the poppet (310) is configured to move out of the seated position and open the valve when the magnetic force across the air gap is exceeded by a pressure force of the liquid water acting on the poppet, wherein the magnetic force across the air gap decreases as the valve opens.

5. The valve of claim 4, wherein the inner body defines a plurality of cavities (306), wherein the plurality of cavities is configured to permit water to drain out of the valve as the valve opens, wherein the pressure force of the impermeable liquid water accumulated along the semi-permeable membrane decreases as the water drains out of the valve, and optionally wherein the magnetic force across the air gap is configured to increase as the pressure force of the liquid water within the valve decreases, wherein the increasing magnetic force across the air gap shifts the poppet back into the seated position.

6. The valve of any preceding claim, wherein the poppet further comprises a poppet stem.

7. The valve of claim 6, wherein the poppet stem defines a channel, wherein the channel is configured to permit at least one of air and water vapor to pass therethrough.

8. The valve of claim 7, wherein the poppet further comprises a membrane, wherein the membrane is a semi-permeable membrane (314) configured to overlay the poppet stem defining the channel.

9. The valve of claim 8, wherein the semi-permeable membrane (314) is further configured to permit at least one of air and water vapor to pass therethrough, and optionally wherein the semi-permeable membrane is further configured to be impermeable to liquid water.

10. The valve of any preceding claim, wherein the magnet is radially polarized between the inner cylindrical face and the outer cylindrical face.

11. The valve of any preceding claim, wherein the magnet comprises a plurality of annular segments (604), and optionally wherein the plurality of annular segments defines a plurality of recesses (602), wherein each recess extends between the inner cylindrical face and the outer cylindrical face of the magnet; or wherein the magnet is a continuous, annular magnet.

12. An aircraft light unit, the aircraft light unit comprising:
a valve (300) according to any preceding claim, and
a lighting housing, wherein the lighting housing is coupled to the valve (300).

13. The aircraft light unit of claim 12, wherein the non-magnetic collar portion is downstream of the lighting housing.

14. The aircraft light unit of claim 13, wherein the inner body defines a plurality of cavities (520), wherein the plurality of cavities is configured to permit water to drain in a negative y direction from the lighting housing.

15. A method of assembling a valve for an aircraft light unit, the method comprising:
assembling a poppet (310), wherein the poppet further comprises a poppet stem defining a channel, wherein the channel is configured to permit at least one of air and water vapor to pass therethrough, wherein the poppet further comprises a planar face defining an annular groove, the assembling further comprising:
installing a polymer seal (302) within the annular groove, wherein the polymer seal is an O-ring; and
overlaying the channel with a semi-permeable membrane (314),
wherein the semi-permeable membrane is configured to permit at least one of air and water vapor to pass into the channel, wherein the semi-permeable membrane is further configured to be impermeable to liquid water, wherein liquid water is configured to accumulate along the membrane;
placing a seat within an inner body (322) of the valve (300);
disposing the poppet onto the seat (308) within the inner body, wherein the seat is configured to support the poppet, wherein the inner body is configured to house the poppet and the seat;
setting the inner body within an outer body (304), wherein the outer body is configured to ring the inner body, wherein setting the inner body within the outer body defines a recess between the inner body and the outer body;
disposing a permanent magnet (312) within the recess between the inner body and the outer body, wherein the magnet further comprises an inner cylindrical face having a north pole and an outer cylindrical face having a south pole, the outer cylindrical face radially opposing the inner cylindrical face; and
enclosing the valve with an inlet fitting body (301), wherein the inlet fitting body is configured to cover the inner body, the magnet, and the outer body, wherein the inlet fitting body comprises a shoulder portion (303) and a collar portion (305), wherein the collar portion at least partially defines a lighting cavity (307), wherein the collar portion is configured to couple to a lighting housing of a lighting unit at the lighting cavity.

## Patentansprüche

1. Ventil für eine Flugzeugaußenlichteinheit, wobei das Ventil Folgendes umfasst:
einen Einlassanschlusskörper (301), der einen nicht magnetischen Halsabschnitt (305) und einen magnetischen Schulterabschnitt (303) aufweist, wobei der nicht magnetische Halsabschnitt mindestens teilweise einen Beleuchtungshohlraum (307) definiert, wobei der magnetische Schulterabschnitt eine Innenfläche umfasst;
einen Außenkörper (304);
einen Innenkörper (322), der innerhalb des Außenkörpers (304) angeordnet ist, wobei der Innenkörper Folgendes umfasst:
einen Ventilteller (310), der zwischen der Innenfläche des Schulterabschnitts und einem Sitz (308) angeordnet ist,
wobei die Innenfläche des magnetischen Schulterabschnitts (303) dem Innenkörper und dem Ventilteller zugewandt ist;
wobei der Sitz dazu konfiguriert ist, den Ventilteller zu stützen;
einen Luftspalt (309), der sich zwischen der Innenfläche des magnetischen Schulterabschnitts und dem Ventilteller erstreckt;
eine Polymerdichtung (302), die innerhalb einer ringförmigen Nut des Ventiltellers gehalten ist, wobei die Polymerdichtung dazu konfiguriert ist, den Ventilteller an die Innenfläche des Schulterabschnitts des Einlassanschlusskörpers zu koppeln; und
einen Permanentmagneten (312), der zwischen dem Innenkörper und einem Außenkörper des Ventils angeordnet ist, wobei der Magnet ferner eine zylindrische Innenfläche (606), die einen Nordpol aufweist, und eine zylindrische Außenfläche (600) umfasst, die einen Südpol aufweist, wobei die zylindrische Außenfläche (600) der zylindrischen Innenfläche (606) radial gegenüberliegt,
wobei der Magnet des Ventils dazu konfiguriert ist, einen Magnetflusskreis (318) zu induzieren, wobei der durch den Magneten induzierte Magnetflusskreis eine Vielzahl von geschlossenen Schleifenpfaden umfasst, die einen Magnetfluss enthalten, wobei der Magnetfluss von der zylindrischen Innenfläche (606) des Magneten ausgeht, durch den Innenkörper und den Ventilteller hinauf fließt, den Luftspalt in den magnetischen Schulterabschnitt des Einlassanschlusskörpers durchquert, den Innenkörper hinunter und in den Außenkörper fließt und an der zylindrischen Außenfläche (600) des Magneten endet.

2. Ventil nach Anspruch 1, wobei die Polymerdichtung ein O-Ring ist.

3. Ventil nach Anspruch 1 oder 2, wobei der den Luftspalt (309) durchquerende Magnetfluss eine Magnetkraft über dem Luftspalt entwickelt, wobei die Magnetkraft über dem Luftspalt dazu konfiguriert ist, den Ventilteller an die Innenfläche des Schulterabschnitts anzuziehen, wobei die Magnetkraft dazu konfiguriert ist, das Ventil zu schließen und wobei die Polymerdichtung optional dazu konfiguriert ist, den Ventilteller an dem Schulterabschnitt in einer Sitzposition zu halten.

4. Ventil nach Anspruch 3, wobei der Ventilteller (310) dazu konfiguriert ist, sich aus der Sitzposition zu bewegen und das Ventil zu öffnen, wenn die Magnetkraft über dem Luftspalt durch eine auf den Ventilteller ausgeübte Druckkraft des flüssigen Wassers überschritten wird, wobei die Magnetkraft über dem Luftspalt abnimmt, wenn sich das Ventil öffnet.

5. Ventil nach Anspruch 4, wobei der Innenkörper eine Vielzahl von Hohlräumen (306) definiert, wobei die Vielzahl von Hohlräumen dazu konfiguriert ist, ein Ablassen von Wasser aus dem Ventil beim Öffnen des Ventils zu erlauben, wobei die Druckkraft des sich entlang der semipermeablen Membran angesammelten undurchlässigen flüssigen Wassers beim Ablassen des Wassers aus dem Ventil abnimmt und wobei die Magnetkraft über dem Luftspalt optional dazu konfiguriert ist, bei abnehmender Druckkraft des flüssigen Wassers innerhalb des Ventils zuzunehmen, wobei die zunehmende Magnetkraft über dem Luftspalt den Ventilteller zurück in die Sitzposition schiebt.

6. Ventil nach einem der vorhergehenden Ansprüche, wobei der Ventilteller ferner einen Ventiltellerschaft umfasst.

7. Ventil nach Anspruch 6, wobei der Ventiltellerschaft einen Kanal definiert, wobei der Kanal dazu konfiguriert ist, ein Passieren von mindestens einem von Luft und Wasserdampf zu erlauben.

8. Ventil nach Anspruch 7, wobei der Ventilteller ferner eine Membran umfasst, wobei die Membran eine semipermeable Membran (314) ist, die dazu konfiguriert ist, den den Kanal definierenden Ventiltellerschaft zu bedecken.

9. Ventil nach Anspruch 8, wobei die semipermeable Membran (314) ferner dazu konfiguriert ist, ein Passieren von mindestens einem von Luft und Wasserdampf zu erlauben und wobei die semipermeable Membran optional ferner dazu konfiguriert ist, für flüssiges Wasser undurchlässig zu sein.

10. Ventil nach einem der vorhergehenden Ansprüche, wobei der Magnet zwischen der zylindrischen Innenfläche und der zylindrischen Außenfläche radial polarisiert ist.

11. Ventil nach einem der vorhergehenden Ansprüche, wobei der Magnet eine Vielzahl von ringförmigen Segmenten (604) umfasst und wobei die Vielzahl von ringförmigen Segmenten optional eine Vielzahl von Aussparungen (602) definiert, wobei sich jede Aussparung zwischen der zylindrischen Innenfläche und der zylindrischen Außenfläche des Magneten erstreckt; oder wobei der Magnet ein durchgehender, ringförmiger Magnet ist.

12. Flugzeuglichteinheit, wobei die Flugzeuglichteinheit Folgendes umfasst:
ein Ventil (300) nach einem der vorhergehenden Ansprüche und
ein Beleuchtungsgehäuse, wobei das Beleuchtungsgehäuse an das Ventil (300) gekoppelt ist.

13. Flugzeuglichteinheit nach Anspruch 12, wobei sich der nicht magnetische Halsabschnitt stromabwärts des Beleuchtungsgehäuses befindet.

14. Flugzeuglichteinheit nach Anspruch 13, wobei der Innenkörper eine Vielzahl von Hohlräumen (520) definiert, wobei die Vielzahl von Hohlräumen dazu konfiguriert ist, ein Ablassen von Wasser in einer negativen y-Richtung aus dem Beleuchtungsgehäuse zu erlauben.

15. Verfahren zum Zusammenbauen eines Ventils für eine Flugzeuglichteinheit, wobei das Verfahren Folgendes umfasst:
Zusammenbauen eines Ventiltellers (310), wobei der Ventilteller ferner einen Ventiltellerschaft umfasst, der einen Kanal definiert, wobei der Kanal dazu konfiguriert ist, ein Passieren von mindestens einem von Luft und Wasserdampf zu erlauben, wobei der Ventilteller ferner eine ebene Fläche umfasst, die eine ringförmige Nut definiert, wobei das Zusammenbauen ferner Folgendes umfasst:
Installieren einer Polymerdichtung (302) innerhalb der ringförmigen Nut, wobei die Polymerdichtung ein O-Ring ist; und
Bedecken des Kanals mit einer semipermeablen Membran (314), wobei die semipermeable Membran dazu konfiguriert ist, ein Passieren von mindestens einem von Luft und Wasserdampf in den Kanal zu erlauben, wobei die semipermeable Membran ferner dazu konfiguriert ist, für flüssiges Wasser undurchlässig zu sein, wobei flüssiges Wasser dazu konfiguriert ist, sich entlang der Membran anzusammeln;
Platzieren eines Sitzes innerhalb eines Innenkörpers (322) des Ventils (300);
Anordnen des Ventiltellers auf dem Sitz (308) innerhalb des Innenkörpers, wobei der Sitz dazu konfiguriert ist, den Ventilteller zu stützen, wobei der Innenkörper dazu konfiguriert ist, den Ventilteller und den Sitz aufzunehmen;
Einsetzen des Innenkörpers innerhalb eines Außenkörpers (304), wobei der Außenkörper dazu konfiguriert ist, den Innenkörper zu umgeben, wobei das Einsetzen des Innenkörpers innerhalb des Außenkörpers eine Aussparung zwischen dem Innenkörper und dem Außenkörper definiert;
Anordnen eines Permanentmagneten (312) innerhalb der Aussparung zwischen dem Innenkörper und dem Außenkörper, wobei der Magnet ferner eine zylindrische Innenfläche, die einen Nordpol aufweist, und eine zylindrische Außenfläche, die einen Südpol aufweist, umfasst, wobei die zylindrische Außenfläche der zylindrischen Innenfläche radial gegenüberliegt; und
Umschließen des Ventils mit einem Einlassanschlusskörper (301), wobei der Einlassanschlusskörper dazu konfiguriert ist, den Innenkörper, den Magneten und den Außenkörper abzudecken, wobei der Einlassanschlusskörper einen Schulterabschnitt (303) und einen Halsabschnitt (305) umfasst, wobei der Halsabschnitt mindestens teilweise einen Beleuchtungshohlraum (307) definiert, wobei der Halsabschnitt dazu konfiguriert ist, an dem Beleuchtungshohlraum an ein Beleuchtungsgehäuse einer Lichteinheit gekoppelt zu werden.

## Revendications

1. Soupape pour une unité d'éclairage extérieure d'aéronef, la soupape comprenant :
un corps de raccord d'entrée (301) ayant une partie de collier non magnétique (305) et une partie d'épaulement magnétique (303), la partie de collier non magnétique définissant au moins partiellement une cavité d'éclairage (307), la partie d'épaulement magnétique comprenant une surface intérieure ;
un corps extérieur (304) ;
un corps intérieur (322) disposé dans le corps extérieur (304), le corps intérieur comprenant :
un clapet (310) disposé entre la surface intérieure de la partie d'épaulement et un siège (308),
dans laquelle la surface intérieure de la partie d'épaulement magnétique (303) fait face au corps intérieur et au clapet ;
dans laquelle le siège est configuré pour supporter le clapet ;
un entrefer (309) s'étendant entre la surface intérieure de la partie d'épaulement magnétique et le clapet ;
un joint polymère (302) retenu dans une rainure annulaire du clapet, le joint polymère étant configuré pour accoupler le clapet à la surface intérieure de la partie d'épaulement du corps de raccord d'entrée ; et
un aimant permanent (312) disposé entre le corps intérieur et un corps extérieur de la soupape, l'aimant comprenant également une face cylindrique intérieure (606) ayant un pôle nord et une face cylindrique extérieure (600) ayant un pôle sud, la face cylindrique extérieure (600) étant radialement opposée à la face cylindrique intérieure (606),
dans laquelle l'aimant de la soupape est configuré pour induire un circuit de flux magnétique (318), dans laquelle le circuit de flux magnétique induit par l'aimant comprend une pluralité de trajets en boucle fermée contenant un flux magnétique, dans laquelle le flux magnétique provient de la face cylindrique intérieure (606) de l'aimant, circule à travers le corps intérieur et remonte le clapet, traverse l'entrefer dans la partie d'épaulement magnétique du corps de raccord d'entrée, circule vers le bas du corps intérieur et dans le corps extérieur, et se termine au niveau de la face cylindrique extérieure (600) de l'aimant.

2. Soupape selon la revendication 1, dans laquelle le joint polymère est un joint torique.

3. Soupape selon la revendication 1 ou 2, dans laquelle le flux magnétique traversant l'entrefer (309) développe une force magnétique à travers l'entrefer, dans laquelle la force magnétique à travers l'entrefer est configurée pour attirer le clapet vers la surface intérieure de la partie d'épaulement, dans laquelle la force magnétique est configurée pour fermer la soupape, et éventuellement dans laquelle le joint polymère est configuré pour retenir le clapet sur la partie d'épaulement dans une position d'appui.

4. Soupape selon la revendication 3, dans laquelle le clapet (310) est configuré pour sortir de la position d'appui et ouvrir la soupape lorsque la force magnétique à travers l'entrefer est dépassée par une force de pression de l'eau liquide agissant sur le clapet, la force magnétique à travers l'entrefer diminuant à mesure que la soupape s'ouvre.

5. Soupape selon la revendication 4, dans laquelle le corps intérieur définit une pluralité de cavités (306), dans laquelle la pluralité de cavités est configurée pour permettre à l'eau de s'écouler hors de la soupape lorsque la soupape s'ouvre, dans laquelle la force de pression de l'eau liquide imperméable accumulée le long de la membrane semi-perméable diminue à mesure que l'eau s'écoule hors de la soupape, et éventuellement dans laquelle la force magnétique à travers l'entrefer est configurée pour augmenter à mesure que la force de pression de l'eau liquide à l'intérieur de la soupape diminue, dans laquelle la force magnétique croissante à travers l'entrefer ramène le clapet en position d'appui.

6. Soupape selon une quelconque revendication précédente, dans laquelle le clapet comprend également une tige de clapet.

7. Soupape selon la revendication 6, dans laquelle la tige de clapet définit un canal, le canal étant configuré pour permettre à au moins l'un de l'air et de la vapeur d'eau de le traverser.

8. Soupape selon la revendication 7, dans laquelle le clapet comprend également une membrane, la membrane étant une membrane semi-perméable (314) configurée pour recouvrir la tige de clapet définissant le canal.

9. Soupape selon la revendication 8, dans laquelle la membrane semi-perméable (314) est également configurée pour permettre à au moins l'un de l'air et de la vapeur d'eau de la traverser, et éventuellement dans laquelle la membrane semi-perméable est également configurée pour être imperméable à l'eau liquide.

10. Soupape selon une quelconque revendication précédente, dans laquelle l'aimant est polarisé radialement entre la face cylindrique intérieure et la face cylindrique extérieure.

11. Soupape selon une quelconque revendication précédente, dans laquelle l'aimant comprend une pluralité de segments annulaires (604), et éventuellement dans laquelle la pluralité de segments annulaires définit une pluralité d'évidements (602), dans laquelle chaque évidement s'étend entre la face cylindrique intérieure et la face cylindrique extérieure de l'aimant ; ou dans laquelle l'aimant est un aimant annulaire continu.

12. Unité d'éclairage d'aéronef, l'unité d'éclairage d'aéronef comprenant :
une soupape (300) selon une quelconque revendication précédente, et
un boîtier d'éclairage, dans laquelle le boîtier d'éclairage est accouplé à la soupape (300).

13. Unité d'éclairage d'aéronef selon la revendication 12, dans laquelle la partie de collier non magnétique est en aval du boîtier d'éclairage.

14. Unité d'éclairage d'aéronef selon la revendication 13, dans laquelle le corps intérieur définit une pluralité de cavités (520), la pluralité de cavités étant configurée pour permettre à l'eau de s'écouler dans une direction y négative à partir du boîtier d'éclairage.

15. Procédé d'assemblage d'une soupape pour unité d'éclairage d'aéronef, le procédé comprenant :
l'assemblage d'un clapet (310), le clapet comprenant également une tige de clapet définissant un canal, le canal étant configuré pour permettre à au moins l'un de l'air et de la vapeur d'eau de le traverser, le clapet comprenant également une face plane définissant une rainure annulaire, l'assemblage comprenant également :
l'installation d'un joint polymère (302) dans la rainure annulaire, le joint polymère étant un joint torique ; et
le recouvrement du canal avec une membrane semi-perméable (314), la membrane semi-perméable étant configurée pour permettre à au moins l'un de l'air et de la vapeur d'eau de passer dans le canal, la membrane semi-perméable étant également configurée pour être imperméable à l'eau liquide, l'eau liquide étant configurée pour s'accumuler le long de la membrane ;
le placement d'un siège dans un corps intérieur (322) de la soupape (300) ;
la disposition du clapet sur le siège (308) dans le corps intérieur, le siège étant configuré pour supporter le clapet, le corps intérieur étant configuré pour loger le clapet et le siège ;
le placement du corps intérieur dans un corps extérieur (304), le corps extérieur étant configuré pour entourer le corps intérieur, le placement du corps intérieur dans le corps extérieur définissant un évidement entre le corps intérieur et le corps extérieur ;
la disposition d'un aimant permanent (312) dans l'évidement entre le corps intérieur et le corps extérieur, l'aimant comprenant également une face cylindrique intérieure ayant un pôle nord et une face cylindrique extérieure ayant un pôle sud, la face cylindrique extérieure étant radialement opposée à la face cylindrique intérieure ; et
l'enfermement de la soupape avec un corps de raccord d'entrée (301), le corps de raccord d'entrée étant configuré pour recouvrir le corps intérieur, l'aimant et le corps extérieur, le corps de raccord d'entrée comprenant une partie d'épaulement (303) et une partie de collier (305), la partie de collier définissant au moins partiellement une cavité d'éclairage (307), la partie de collier étant configurée pour s'accoupler à un boîtier d'éclairage d'une unité d'éclairage au niveau de la cavité d'éclairage.
